# FASCICULE DE BREVET EUROPEEN

(11) **EP 2 133 237 B1**
(45) Date de publication et mention de la délivrance du brevet: **04.03.2015**
(21) Numéro de dépôt: 09162212.6
(22) Date de dépôt: 08.06.2009
(51) Int. Cl.: B60R 1/00, G06T 15/20, G06T 1/00, H04N 5/262, H04N 5/265

(54) **Procédé d'affichage d'aide au parking**
Verfahren zur Anzeige einer Einparkhilfe
Process of displaying a parking aid

(30) Priorité: 13.06.2008 FR 0803353
(43) Date de publication de la demande: 16.12.2009
(73) Titulaire: VALEO VISION, 93012 Bobigny (FR)
(72) Inventeur: Fleury, Benoist, 94300 Vincennes (FR)

(56) Documents cités:
- EP-A- 1 434 441
- US-A1- 2005 231 341
- US-A1- 2005 240 342

## Description

La présente invention concerne un procédé d'affichage d'aide à la conduite pour véhicule automobile, et un dispositif d'affichage permettant de mettre en oeuvre ledit procédé.

Elle trouve une application particulière dans le domaine des véhicules automobiles.

Dans le domaine des véhicules automobile, le document US2005/0240342 A1, divulgue un procédé d'aide à la conduite permettant de générer sur une unité d'affichage, une image de la route prise par des caméras d'un véhicule. Un art antérieur connu de procédé d'affichage d'aide à la conduite pour véhicule automobile est un procédé d'affichage d'aide à la conduite lors de manoeuvres basses vitesse, lorsque par exemple un automobiliste veut se garer. Un tel procédé comporte les étapes :
- d'afficher, sur une première partie gauche d'un écran du tableau de bord du véhicule, simultanément l'ensemble des images produites par quatre caméras de 180° d'angle de vue re-projetées au sol de sorte à permettre une vision vue d'oiseau de l'environnement immédiat du véhicule, lui-même étant matérialisé par son image en vue de dessus ; et
- d'afficher à grande échelle, sur une deuxième partie de l'écran du tableau de bord, simultanément à l'affichage précédent, une vue complète d'un nombre prédéterminé d'images telles qu'enregistrées par la ou les caméras i.e. avant re-projection au sol.

Cet art antérieur présente les inconvénients suivants :
- le nombre et l'agencement des images affichées à plus grande échelle sur la deuxième partie de l'écran sont prédéterminés,
- de plus, l'orientation contradictoire de la vue d'oiseau et des images à plus grande échelle peut perturber la bonne compréhension de l'environnement du véhicule et ainsi gêner un utilisateur du véhicule pour se garer par exemple.

La présente invention a pour but un procédé d'affichage d'aide au parking pour véhicule automobile, qui permet d'éviter les inconvénients cités ci-dessus.

Selon un premier objet de l'invention, ce but est atteint par un procédé d'affichage d'aide à la conduite pour véhicule automobile, **caractérisé en ce qu**'il comporte les étapes de :
- déterminer au moins un point de vue d'un véhicule, le point de vue variant en fonction d'un événement particulier ;
- générer une scène 3D en fonction du point de vue déterminé, la scène comprenant :

- un modèle 3D du véhicule, et
- au moins un écran virtuel représentatif d'un angle solide observé par au moins une caméra vidéo du véhicule ; et
- afficher la scène 3D avec au moins une image acquise par la caméra vidéo projetée dans un écran virtuel correspondant.

Comme on va le voir en détail par la suite, le fait d'afficher en 3D l'environnement du véhicule grâce aux écrans virtuels, et le fait de déterminer le point de vue de la scène en fonction d'un événement particulier, tel qu'une détection d'obstacle par exemple, va offrir en temps réel le meilleur point de vue au conducteur et va permettre à l'utilisateur du véhicule d'appréhender plus facilement l'environnement extérieur au véhicule.

Selon une variante de réalisation, le procédé d'affichage d'aide à la conduite pour véhicule automobile, comporte les étapes de :
- déterminer au moins un point de vue d'un modèle 3D d'un véhicule, le point de vue variant en fonction d'un événement particulier;
- générer une scène 3D en fonction du point de vue déterminé, la scène comprenant :

- un modèle 3D du véhicule représenté selon le point de vue déterminé, et
- au moins un écran virtuel représentatif d'un angle solide observé par au moins une caméra vidéo du véhicule et dont la forme est représentative de la perspective sous laquelle ledit écran virtuel va être vu par un utilisateur du véhicule, lorsque la scène 3D sera affichée à l'écran selon le point de vue déterminé; et
- afficher la scène 3D avec au moins une image acquise par la caméra vidéo projetée dans un écran virtuel correspondant en fonction du point de vue déterminé.
   Ainsi en projetant cette image acquise sur cet écran virtuel, on obtiendra une scène tridimensionnelle, ou scène 3D, dans laquelle le véhicule est représenté dans son environnement selon le point de vue déterminé.
   Selon des modes de réalisation non limitatifs, le procédé présente en outre les caractéristiques suivantes.
- Un événement particulier est :

- une sélection de l'utilisateur ; ou
- une détection d'obstacles dans l'environnement du véhicule ; et/ou
- des paramètres propres au véhicule.

La sélection par l'utilisateur permet à ce dernier de choisir lui-même le point de vue qui lui convient. La détection d'obstacles permet de prévenir l'utilisateur de l'approche d'un obstacle.

Les paramètres propres au véhicule tels que vitesse, direction, angle de rotation, permettent de déterminer automatiquement un point de vue sans action de l'utilisateur.

La scène 3D comporte au moins un écran virtuel qui se trouve dans un même référentiel que le modèle 3D du véhicule. Un tel écran est représentatif de l'environnement du véhicule vu par une caméra correspondante dudit véhicule qui est solidaire du véhicule.

La scène 3D comporte au moins un écran virtuel qui se trouve dans un référentiel différent du modèle 3D du véhicule. Cela permet de déterminer la capacité de passage du véhicule dans un goulet de la chaussée.

Lors de l'affichage de la scène 3D, le modèle 3D du véhicule est affiché selon un paramètre de transparence associé. Cela permet de laisser visible des parties d'écrans virtuels que le modèle 3D occulterait.

Une des caméras utilisée pour générer une scène est une caméra arrière grand angle. Cela permet d'anticiper le contact du bouclier du véhicule avec un obstacle qui se rapproche du véhicule.

Le procédé d'affichage comporte une étape initiale de :
- générer un modèle 3D du véhicule ;
- générer au moins un écran virtuel représentatif d'un angle solide observé par au moins une caméra vidéo du véhicule.

Selon un deuxième objet de l'invention, elle concerne un dispositif d'affichage d'aide à la conduite pour véhicule automobile, comportant :
- une unité de contrôle pour :

- déterminer au moins un point de vue d'un véhicule, le point de vue variant en fonction d'un événement particulier ;
- générer une scène 3D en fonction du point de vue déterminé, la scène comprenant :

- un modèle 3D du véhicule, et
- au moins un écran virtuel représentatif d'un angle solide observé par au moins une caméra vidéo du véhicule ; et
- une unité d'affichage pour afficher la scène 3D avec au moins une image acquise par la caméra vidéo projetée dans un écran virtuel correspondant.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

D'autres caractéristiques et avantages de la présente invention seront mieux compris à l'aide de la description et des dessins non limitatifs parmi lesquels :
- la Fig. 1 représente un diagramme d'un mode de réalisation non limitatif du procédé d'affichage selon l'invention ;
- la Fig. 2 représente un schéma d'un véhicule automobile muni de caméras vidéo utilisées par le procédé d'affichage selon l'invention ;
- les Fig. 3 à 6 représentent différents points de vue d'un modèle 3D du véhicule automobile déterminés selon le procédé de la Fig. 1 ;
- les Fig. 7 à 9 représentent un écran virtuel représentatif d'angles solides observés par une caméra du véhicule déterminés selon le procédé de la Fig. 1 ;
- les Fig. 10 à 13 représentent les différents points de vue d'un modèle 3D du véhicule automobile selon respectivement les Fig. 3 à 6 avec les écrans virtuels déterminés selon les Fig. 7 à 9 ;
- les Fig. 14 à 17 représentent le modèle 3D du véhicule automobile et des images acquises par différents caméras du véhicule et projetées dans les écrans virtuels selon respectivement les Fig. 10 à 13 ;
- Les Fig. 18 à 20 représentent le modèle 3D du véhicule automobile et des images acquises par différents caméras du véhicule et projetées dans les écrans virtuels au fur et à mesure d'une variation de point de vue selon le procédé de la Fig. 1 ; et
- la Fig. 21 illustre un mode de réalisation non limitatif d'un dispositif de mise en oeuvre du procédé de la Fig. 1.

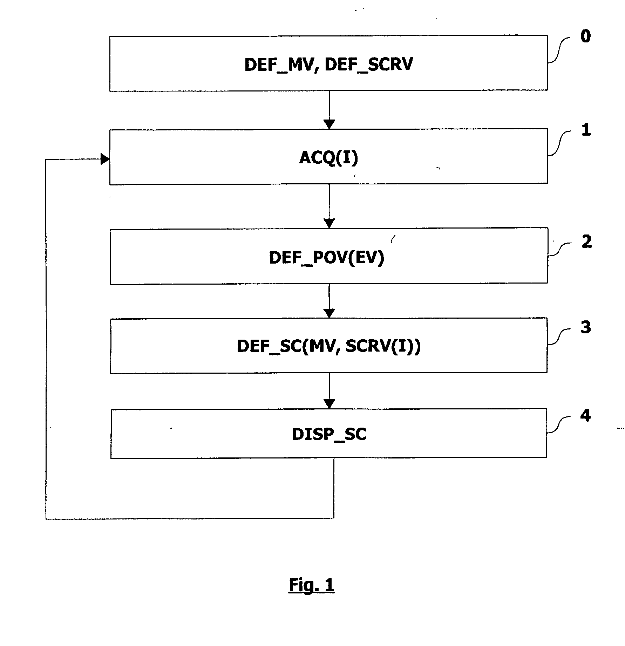

Le procédé d'affichage d'aide à la conduite pour véhicule automobile, selon l'invention, est décrit dans un mode de réalisation non limitatif à la Fig. 1.

Un exemple d'aide à la conduite à basse vitesse, telle que l'aide au parking est pris comme exemple non limitatif pour la suite de la description.

Par véhicule automobile, on entend tout véhicule comprenant un moteur.

Le procédé d'affichage comporte les étapes suivantes telles qu'illustrées à la Fig 1 :
- déterminer au moins un point de vue POV d'un modèle 3D du véhicule V, le point de vue POV variant en fonction d'un événement particulier EV (étape DEF_POV(EV));
- générer une scène 3D (étape DEF_SC(MV, SCRV(I))) en fonction du point de vue déterminé POV, la scène SC comprenant :

- un modèle 3D du véhicule, et
- au moins un écran virtuel SCRV représentatif d'un angle solide A observé par au moins une caméra vidéo CAM du véhicule V ; et
- afficher la scène 3D avec au moins une image I acquise par la caméra vidéo CAM projetée dans l'écran virtuel correspondant SCRV (étape DISP_SC).

On notera que dans un mode de réalisation non limitatif, le procédé comporte en outre une étape supplémentaire d'acquisition d'images de l'environnement du véhicule V considéré par au moins une caméra vidéo CAM (étape ACQ(I)).

On notera que cette étape peut ne pas être comprise dans le procédé décrit, mais peut faire partie d'un autre procédé exécuté en amont du procédé décrit.

Pour la suite de la description, dans le mode de réalisation non limitatif décrit, le procédé comprend cette étape.

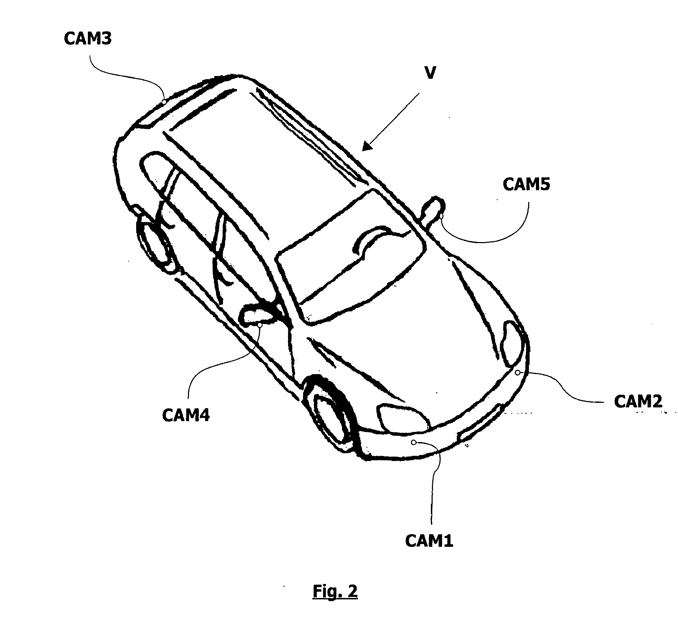

Dans le cadre de l'application décrite, le véhicule automobile V comporte une pluralité de caméras vidéo CAM. Dans un exemple non limitatif, il en comporte cinq telles qu'illustrées sur la Fig. 2 :
- deux caméras CAM1, CAM2 à l'avant du véhicule,
- une caméra CAM3 à l'arrière du véhicule, et
- une caméra latérale CAM4, CAM5 sur chaque côté du véhicule.

Les étapes du procédé sont décrites en détail ci-après.

**Dans une première étape 1)**, on acquiert une séquence SQ d'images I par au moins une caméra vidéo. Ici, on acquière donc cinq séquences d'images SQ par les cinq caméras vidéo du véhicule. L'acquisition d'images I par une caméra CAM sur un véhicule V, étant connue de l'homme du métier, elle n'est pas décrite ici.

**Dans une deuxième étape 2)**, on détermine au moins un point de vue POV d'un modèle 3D du véhicule V, le point de vue POV variant en fonction d'un événement particulier EV.

Dans des modes de réalisation non limitatifs, un événement particulier EV est :
- une détection d'obstacles dans l'environnement du véhicule ; ou
- des paramètres propres au véhicule ; et/ou
- une sélection d'un utilisateur.

Dans les deux premiers modes, un point de vue POV est déterminé automatiquement. Cela évite à l'utilisateur de lui même sélectionner le point de vue pendant qu'il conduit. Cela peut ainsi lui simplifier la tâche lorsqu'il conduit, lors de sa manoeuvre pour se garer par exemple.

Dans le troisième mode, un point de vue POV est déterminé en fonction de la sélection de l'utilisateur, donc pas automatiquement. Cela permet à l'utilisateur de choisir le point de vue qu'il juge le plus adéquat à sa manoeuvre, lorsqu'il se gare par exemple.

Dans le premier mode, lorsque l'utilisateur conduit son véhicule, le point de vue POV est sélectionné selon des paramètres extérieurs au véhicule, tel qu'une détection d'obstacle. Que l'obstacle soit immobile comme par exemple une borne, ou mobile comme par exemple un piéton qui passe derrière le véhicule, le point de vue POV est automatiquement déterminé pour aider l'utilisateur dans sa conduite, dans l'exemple pris pour se garer. Ainsi, un point de vue POV sélectionné sera celui du véhicule qui montre l'arrière du véhicule. Un autre point de vue peut être celui qui montre le véhicule de côté.

On notera que la détection d'obstacle peut s'effectuer par un algorithme de traitement d'image analysant lesdites images fournies par les caméras ou par d'autres capteurs d'environnement tels que les capteurs ultrason ou des radars ou tout autre capteur d'environnement ou encore par des algorithmes fusionnant les données fournies par lesdites caméras et des capteurs d'environnement. La détection d'obstacle étant connue de l'homme du métier, elle ne sera pas décrite ici.

Dans le deuxième mode, lorsque l'utilisateur conduit son véhicule, le point de vue POV est sélectionné selon des paramètres propres au véhicule tels que dans des exemples non limitatifs :
- la vitesse du véhicule, et/ou
- de l'angle de virage du véhicule, et/ou
- de la direction dans laquelle roule le véhicule (le véhicule avance, ou recule).

Ainsi, dans le premier exemple, si le véhicule roule vite, par exemple à une vitesse de 70km/h, les informations utiles seront celles qui sont dans l'environnement lointain du véhicule, car le regard du conducteur du véhicule se porte sur les événements qui vont arriver dans les deux secondes par exemple, et donc qui seront à une distance correspondante de 40m. Un des points de vue POV choisi sera donc celui montrant l'avant du véhicule dans un exemple non limitatif de manière à utiliser notamment les images provenant des caméras avant CAM1 et CAM2. Par contre, si le véhicule roule doucement, les informations utiles seront celles qui sont dans l'environnement immédiat du véhicule, et notamment celles qui sont sur les côtés du véhicule. Un des points de vue POV choisi sera donc celui montrant une vue d'oiseau du véhicule dans un exemple non limitatif de manière à utiliser notamment les images provenant des caméras avant CAM1 et CAM2, latérales CAM3 et CAM4 et arrière CAM5.

Ainsi, dans le deuxième exemple, si le conducteur du véhicule effectue une manoeuvre de recul avec rotation, les informations utiles pour se garer seront celles qui sont au niveau de l'aile avant extérieure au virage. Un des points de vue POV choisi sera donc celui qui montre le véhicule en vue de haut par devant dans un exemple non limitatif de manière à utiliser notamment les images provenant de la caméra latérale droite CAM3 correspondant à l'extérieur du virage, et la caméra arrière CAM5 correspondant à l'extérieur du virage.

Ainsi, dans le troisième exemple, si le véhicule recule, le point de vue POV déterminé sera celui montrant le véhicule en vue de haut par devant dans un exemple non limitatif de manière à utiliser notamment les images provenant de la caméra arrière CAM5, tandis que si le véhicule avance, le point de vue POV déterminé sera celui montrant le véhicule en vue de haut par derrière dans un exemple non limitatif de manière à utiliser notamment les images provenant de la caméra avant.

Bien entendu, il est possible de combiner le premier et le deuxième modes.

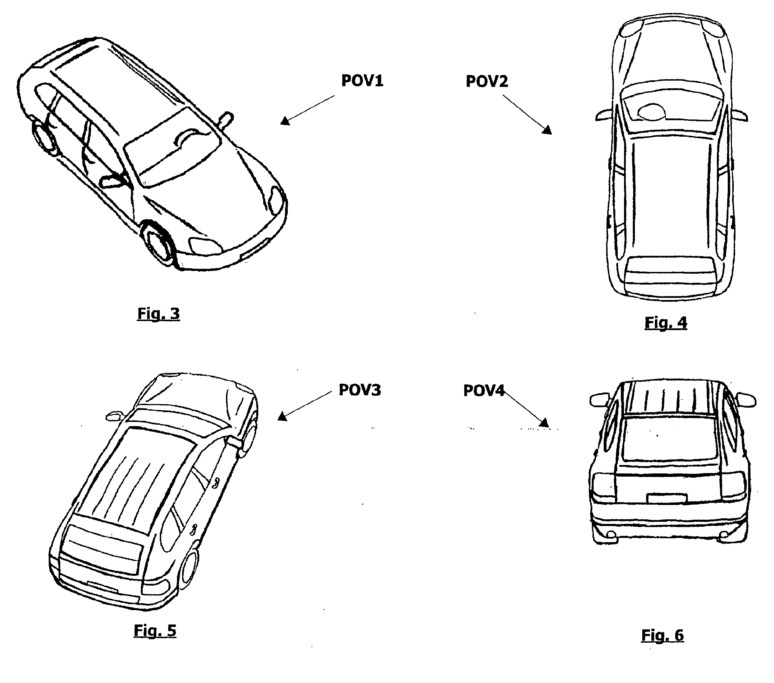

Les Fig. 3 à 6 montrent des exemples non limitatifs de points de vue POV du véhicule déterminés.

La Fig. 3 montre un premier point de vue POV1 du modèle 3D du véhicule V vue de haut éloignée en diagonale. Ce point de vue peut être par exemple utilisé lorsque l'utilisateur commence à se garer pour avoir une vue générale de l'environnement du véhicule et voir par exemple les obstacles qui se rapprochent du véhicule.

La Fig. 4 montre un deuxième point de vue POV2 du modèle 3D du véhicule en vue de dessus, appelé également vue d'oiseau. Ce point de vue peut être par exemple utilisé lorsque l'utilisateur gare le véhicule et qu'il est déjà engagé dans la place de parking.

La Fig. 5 montre un troisième point de vue POV3 du modèle 3D du véhicule V vue de haut rapprochée en diagonale. Ce point de vue peut être par exemple utilisé lorsque l'utilisateur gare le véhicule et qu'il est déjà engagé dans la place de parking.

La Fig. 6 montre un troisième point de vue POV4 du modèle 3D du véhicule V vue de derrière. Ce point de vue peut être par exemple utilisé lorsque le véhicule avance doucement en ville par exemple.

Bien entendu, d'autres points de vue peuvent être déterminés.

Ainsi, en déterminant automatiquement un point de vue POV du modèle 3D du véhicule, on peut offrir le meilleur point de vue à l'utilisateur du véhicule pour l'aider dans sa conduite par la suite sans qu'il lui soit nécessaire de faire des efforts pour sélectionner manuellement un point de vue, cette dernière option pouvant lui compliquer la tâche lorsqu'il conduit.

Bien entendu, on peut prévoir un troisième mode dans lequel l'événement particulier est une sélection d'un utilisateur du véhicule V.

Dans ce mode, dans un exemple non limitatif, l'utilisateur choisit un point de vue POV dans une liste de différents points de vue à laquelle il a accès via des moyens de sélection tels que menu tactile ou boutons de sélection par exemple.

**Dans une troisième étape 3)**, on génère une scène 3D en fonction du point de vue déterminé POV, la scène SC comprenant :
- un modèle 3D du véhicule, et
- au moins un écran virtuel SCRV représentatif d'un angle solide A observé par au moins une caméra vidéo CAM du véhicule.

On rappelle qu'un angle solide se mesure en stéradians. On notera que dans un mode de réalisation non limitatif, le procédé selon l'invention comporte une étape initiale de :
- générer un modèle 3D du véhicule ; et
- générer au moins un écran virtuel représentatif d'un angle solide observé par au moins une caméra vidéo du véhicule, telle qu'illustrée sur la Fig. 1 (étape DEF_MV, DEF_SRCV).

On notera que cette étape peut ne pas être comprise dans le procédé décrit, mais peut faire partie d'un autre procédé exécuté en amont du procédé décrit.

Dans l'exemple pris des trois caméras CAM1 à CAM3, on génère trois écrans virtuels SCRV1 à SCRV3, un associé à chaque caméra CAM.

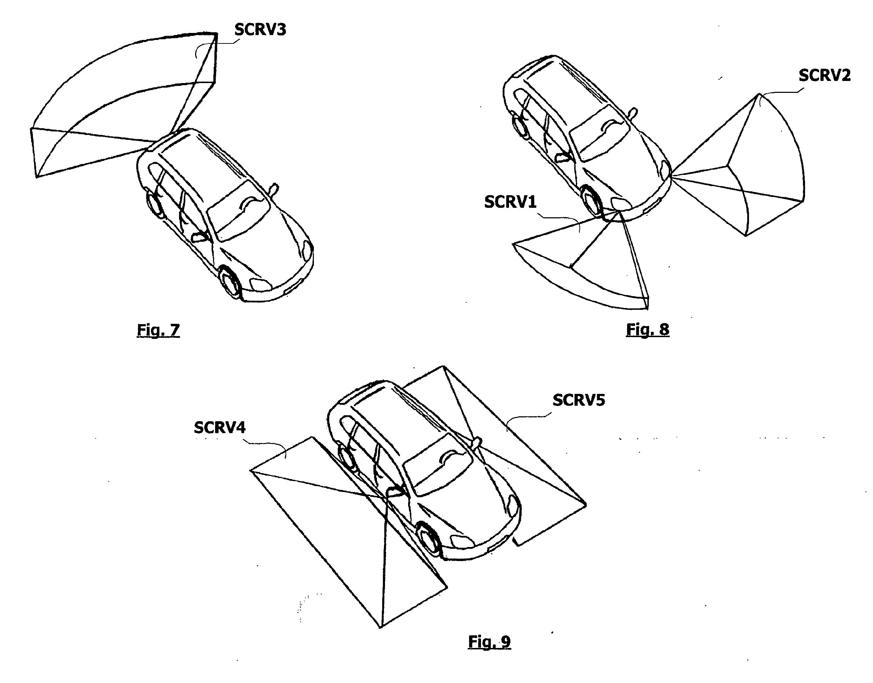

Ainsi, les Fig. 7 et 8 montrent les écrans virtuels associés respectivement à chacune des caméras CAM 1, CAM2 et CAM3. L'avantage de ces trois caméras, est qu'elles permettent de voir des obstacles qui sont au dessus de l'horizon.

Comme on peut le voir, la forme de ces écrans virtuels est représentative de la perspective sous laquelle ils vont être vus par un utilisateur du véhicule, lorsque la scène 3D sera affichée à l'écran selon le point de vue POV déterminé.

En ce qui concerne les caméras latérales CAM 4 et CAM5, on choisit de définir des écrans virtuels représentatifs des images des caméras latérales projetées au sol. Dans un mode de réalisation non limitatif, la méthode de re-projection au sol par transformée de perspective connue de l'homme du métier peut être utilisée. Cela permet d'observer le sol. On peut ainsi obtenir une vue d'oiseau du véhicule.

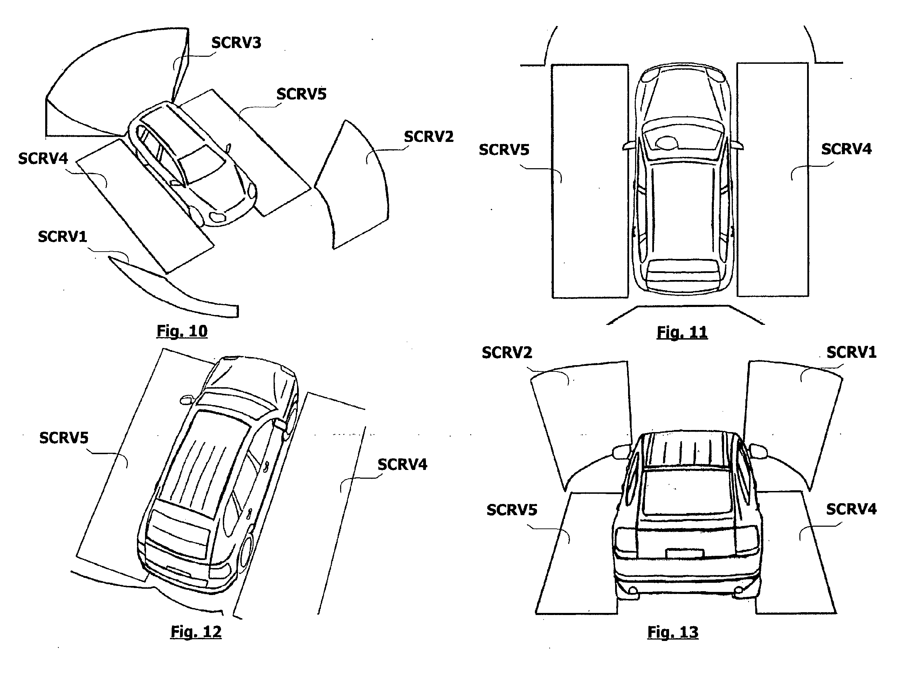

Les Fig. 10 à 13 montrent respectivement les scènes SC générées comprenant les écrans virtuels SCRV1 à SCRV5 associés respectivement aux caméras CAM1 à CAM5 selon les différents points de vue présentés aux Fig. 3 à 6 précédemment.

Comme on peut le voir, selon les points de vue POV, certains écrans virtuels SCRV n'apparaissent pas sur la scène SC générée.

Ainsi, le fait de générer une scène 3D comprenant le modèle 3D du véhicule ainsi que des écrans virtuels va permettre à l'utilisateur du véhicule d'avoir une notion réelle de l'environnement de son véhicule, car la scène est en 3D.

**Dans une quatrième étape 4)**, on affiche la scène 3D avec au moins une image I acquise par la caméra vidéo CAM projetée dans un écran virtuel SCRV correspondant.

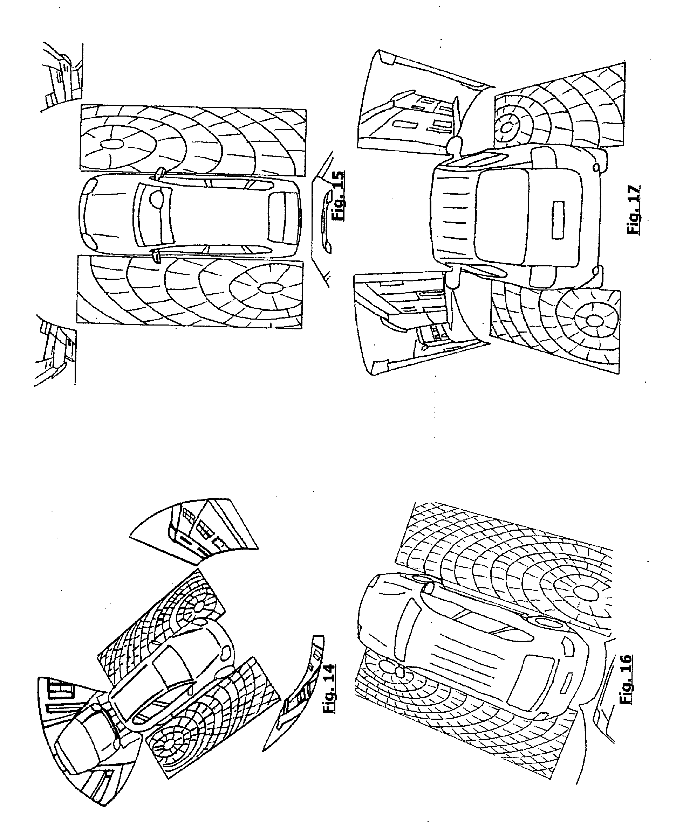

Les images fournies par les caméras sont ainsi dynamiquement intégrées aux écrans virtuels SCRV avec une déformation représentative de la perspective sous laquelle l'écran est vu par l'utilisateur du véhicule selon le point de vue POV déterminé, tel qu'illustré à la Fig. 14 à 17 par exemple respectivement selon les scènes générées aux Fig 10 à 13 selon points de vue déterminés aux Fig. 3 à 6.

Ainsi, le fait d'afficher la scène SC avec les images projetées dans les écrans virtuels SCRV, et ce en fonction du point de vue déterminé POV va permettre par la suite à l'utilisateur du véhicule de mieux appréhender son véhicule dans l'environnement dans lequel il se trouve lorsque par exemple il effectue une manoeuvre délicate telle que garer son véhicule.

Dans un mode de réalisation non limitatif, on peut prévoir que lors de l'affichage de la scène 3D, le modèle 3D du véhicule est affiché selon un paramètre de transparence TRP associé, de sorte à laisser visible des parties d'écrans virtuels SCRV qu'il occulterait.

A cet effet, dans un exemple non limitatif, le paramètre de transparence associé TRP peut être le canal alpha de chaque pixel du modèle 3D du véhicule.

Ainsi, les étapes 1 à 4 décrites ci-dessus sont exécutées en temps réel, au fur et à mesure de l'événement particulier qui arrive.

Par exemple, au fur et à mesure que le véhicule V avance, recule ou qu'un obstacle s'approche, le point de vue POV sera modifié pour offrir le meilleur point de vue au conducteur pour l'aider dans sa conduite.

Ainsi, le point de vue peut varier au fur et à mesure de l'événement particulier qui arrive, et de fait entraîner une génération et un affichage de scène 3D temps réel.

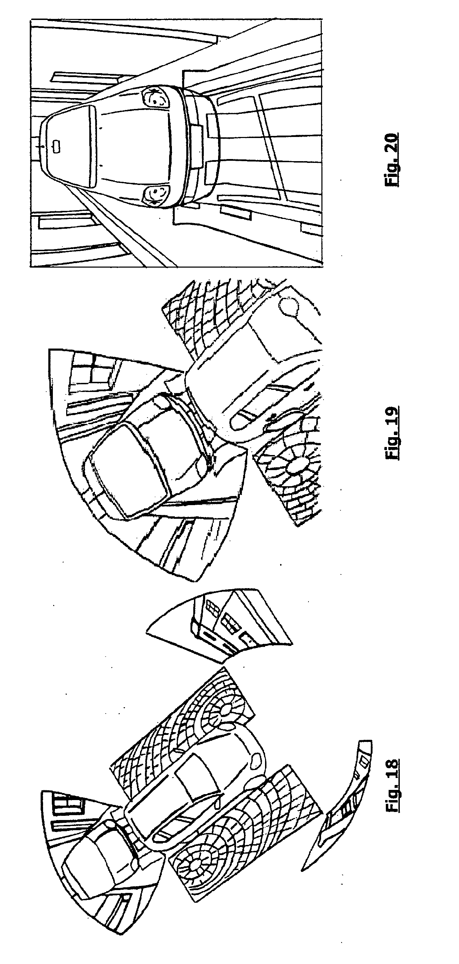

Par exemple, dans un exemple de réalisation non limitatif, l'affichage de la scène 3D au fur et à mesure de la variation du point de vue POV peut même aller continûment jusqu'à un affichage plein écran d'un seul des écrans virtuels SCRV si toute l'information requise pour aider le conducteur du véhicule, par exemple dans sa manoeuvre pour se garer, se trouve sur celle ci, tel qu'illustré sur les Fig. 18, 19 et 20. Dans cet exemple, si le véhicule recule, l'écran virtuel SCRV pertinent sera celui qui offre le point de vue arrière du véhicule et donc correspondant à la caméra arrière CAM3 du véhicule. Dans un autre exemple, si le véhicule tourne, l'écran virtuel SCRV pertinent sera celui qui offre le point de vue sur le flan du véhicule, et correspondant donc à l'angle solide observé par une des caméras latérales CAM4 ou CAM5 du véhicule.

Dans un mode de réalisation non limitatif, au moins un écran virtuel se trouve dans le même référentiel que le modèle 3D, il est solidaire du modèle 3D, c'est-à-dire qu'au fur et à mesure que le modèle 3D se déplace lors de l'affichage de la scène 3D en temps réel, il se déplace également simultanément avec le modèle 3D. Dans un exemple non limitatif, les écrans virtuels SCRV1 à SCRV5 restent solidaires du modèle 3D.

Ces écrans virtuels solidaires sont représentatifs de l'environnement du véhicule vu par les caméras dudit véhicule, ces caméras étant elles-mêmes solidaires du véhicule.

Dans le mode de réalisation non limitatif d'affichage du modèle 3D du véhicule selon un paramètre de transparence associé, en temps réel, le modèle 3D devient plus ou moins transparent au fur et à mesure de l'affichage en temps réel de la scène 3D. Ainsi, on peut voir l'image sur la partie d'écran virtuel SCRV qui est normalement obstruée par le modèle 3D du véhicule.

Ainsi, le procédé décrit permet de présenter au conducteur du véhicule le meilleur point de vue du véhicule et de son environnement et ce de façon réaliste grâce à l'affichage 3D, à la modélisation du véhicule et aux images projetées dans les écrans virtuels.

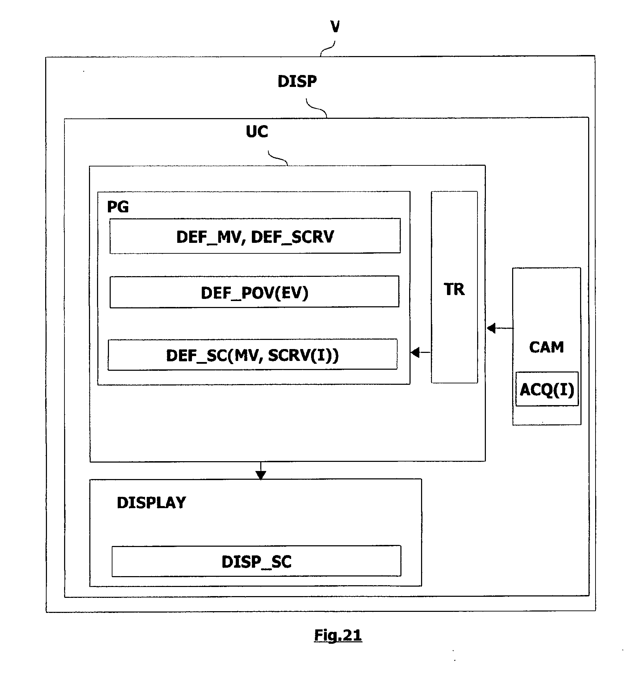

Le procédé de l'invention est mis en oeuvre par un dispositif d'affichage DISP d'aide à la conduite pour véhicule automobile, le véhicule automobile comportant au moins une caméra vidéo, représenté à la Fig. 21.

Ce dispositif DISP est intégré dans le véhicule V.

Ce dispositif DISP comporte notamment :
- une unité de contrôle UC pour :

- déterminer au moins un point de vue POV d'un modèle 3D du véhicule, le point de vue POV variant en fonction d'un événement particulier EV;
- générer une scène 3D SC en fonction du point de vue déterminé POV, la scène comprenant :

- un modèle 3D du véhicule, et
- au moins un écran virtuel SCRV représentatif d'un angle solide A observé par au moins une caméra vidéo CAM du véhicule ; et
- une unité d'affichage DISPLAY pour afficher la scène 3D avec au moins une image I acquise par la caméra vidéo CAM projetée dans un écran virtuel correspondant SCRV.

Il comporte en outre :
- une unité de traitement d'images TR pour notamment projeter les images fournies par les caméras vidéo dans les écrans virtuels SCRV.

Dans cette application, les caméras CAM sont embarquées sur le véhicule V et sont localisées comme suit, dans un mode de réalisation non limitatif :
- deux caméras latérales CAM4 et CAM5 très grand angle (par exemple à angle de vue horizontal de 130°) situées dans les rétroviseurs extérieurs, leur axe optique étant sensiblement vertical et pointant vers le bas, la grande dimension de leur champs étant sensiblement colinéaire à l'axe du véhicule (Fig. 8),
- deux caméras avant CAM1 et CAM2 d'angle d'ouverture de 60° ou grand angle (par exemple à angle de vue horizontal de 130°) ou très grand angle (par exemple à angle de vue horizontal de 170°) implantées dans le bouclier avant et dirigées sensiblement vers l'avant ou vers un axe orienté vers la diagonale extérieure avant, la grande dimension de l'image étant sensiblement horizontale (Fig 9), et
- une caméra arrière grand angle CAM3 (par exemple avec un angle de vue horizontal entre 130° et 170°), située à l'arrière du véhicule, par exemple sur le coffre, qui donne une vue de l'environnement situé derrière le véhicule, centrée latéralement sur l'axe de celui-ci et allant verticalement du bouclier arrière à un plan oblique situé au dessus de l'horizon (Fig 7). Une telle caméra permet d'anticiper le contact du bouclier du véhicule avec un obstacle qui se rapproche du véhicule, par exemple des piétons qui sont à 1 ou 2 mètres du véhicule.

Dans un exemple non limitatif, les caméras CAM acquièrent 30 images par seconde et est par exemple du type VGA de définition 640*480 et comporte une lentille (non représentée) à cet effet.

La position, l'orientation et le nombre de caméras d'un tel dispositif ne sont évidemment pas limités à ces exemples.

Par ailleurs, dans un mode de réalisation non limitatif, dans le cas où l'événement particulier permettant de déterminer un point de vue POV, est une sélection d'un utilisateur comme décrit précédemment, le dispositif d'affichage comporte un menu dans lequel l'utilisateur peut sélectionner le point de vue qu'il désire à partir d'une liste de points de vue disponibles.

Dans un mode de réalisation non limitatif, le dispositif d'affichage DISP peut en outre comporter les caméras vidéo CAM permettant d'acquérir une image I. On notera que dans ce cas, l'unité de traitement d'images TR peut également se trouver dans la caméra CAM ou faire partie de l'unité de contrôle UC également tel qu'illustré sur la fig. 20.

On notera que la mise en oeuvre du procédé d'affichage exposé ci-dessus peut être effectuée au moyen d'un dispositif micro programmé « software », d'une logique câblée et/ou de composants électroniques « hardware ».

Ainsi, le dispositif d'affichage DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 21, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, dans un mode de réalisation non limitatif, au moins un écran virtuel SCRV6 se trouve dans un référentiel différent du modèle 3D ; il est statique par rapport au modèle 3D, c'est-à-dire que lors de l'affichage en temps réel de la scène 3D, le modèle 3D se déplace tandis que l'écran virtuel statique SCRV6' reste immobile dans la scène 3D de sorte que le modèle 3D avance vers cet écran virtuel jusqu'à ce qu'il s'incruste dans cet écran. On notera que dans un mode de réalisation non limitatif, un tel écran virtuel est activé à la demande.

Cela permet de déterminer la capacité de passage du véhicule dans un goulet de la chaussée G, une telle goulée étant projetée dans l'écran statique SCRV6'. On notera que dans des modes de réalisation non limitatifs, on entend par goulet de la chaussée un goulet sur un chantier, un tunnel, un passage sous un pont ou encore un parking. Le goulet peut concerner une largeur limitée de la chaussée et/ou une hauteur limitée de passage et/ou une longueur limite.

Ainsi, dans ce cas, l'unité de traitement d'images TR permet de détecter un goulet de la chaussée G dans l'image projetée dans l'écran virtuel SCRV6', et de comparer le goulet de la chaussée avec le modèle 3D qui est incrusté dans l'écran virtuel SCRV6.

Enfin, bien entendu la description peut s'appliquer à des applications différentes de l'application véhicule automobile décrite.

Ainsi, l'invention présente notamment les avantages suivants :
- Elle permet d'avoir un affichage dynamique de l'environnement du véhicule, grâce au changement de point de vue de la scène 3D;
- Elle permet d'avoir une approche plus réaliste de l'environnement du véhicule grâce à l'affichage 3D;
- Elle permet de toujours montrer au conducteur l'information offerte par les caméras sous leur meilleur point de vue;
- Elle permet d'autoriser l'affichage simultané d'un nombre variables et de combinaisons variables de caméras;
- Elle permet d'offrir une visualisation qui permet de comprendre instantanément la localisation de la scène reproduite de l'environnement du véhicule et ce sans avoir à réduire la surface utile de l'écran pour l'affichage d'une vue additionnelle;
- Elle permet, grâce à la pluralité de caméras disposées autour du véhicule, d'offrir au conducteur la possibilité en sélectionnant l'une ou l'autre de ces cameras d'avoir sur un écran une vue d'une portion angulaire de son environnement qu'il peut difficilement observer depuis son poste de conduite;
- Elle procure au conducteur une vue adaptée à la manoeuvre qu'il est en train d'exécuter. Par exemple dans un manoeuvre de recul il sera intéressant d'afficher le point de vue montrant les images (re-projetées) de la caméra arrière. Si en revanche un obstacle latéral peu gêner dans une manoeuvre de recul avec rotation, l'affichage du point de vue montrant les images (re-projetées) provenant des caméras latérales qui offrent une vue d'oiseau des abords latéraux du véhicule, sera plus pertinent etc.;
- Elle permet d'éviter un affichage permanent sur une première partie de l'écran d'une vue d'oiseau du véhicule et de son environnement immédiat ce qui évite de consommer de la surface d'écran au détriment de la résolution des images affichées sur une deuxième partie d'écran.

## Revendications

1. Procédé d'affichage d'aide à la conduite pour véhicule automobile, comportant les étapes de :
- déterminer au moins un point de vue (POV) d'un modèle 3D d'un véhicule, le point de vue (POV) variant en fonction d'un événement particulier (EV) ;
- générer une scène 3D (SC) en fonction du point de vue déterminé (POV), la scène comprenant :
- un modèle 3D du véhicule représenté selon le point de vue déterminé (POV), et
- au moins un écran virtuel (SCRV) représentatif d'un angle solide (A) observé par au moins une caméra vidéo (CAM) du véhicule et dont la forme est représentative de la perspective sous laquelle ledit écran virtuel va être vu par un utilisateur du véhicule, lorsque la scène 3D sera affichée à l'écran selon le point de vue déterminé (POV); et
- afficher la scène 3D avec au moins une image (I) acquise par la caméra vidéo (CAM) projetée dans un écran virtuel correspondant (SCRV) en fonction du point de vue (POV) déterminé.

2. Procédé d'affichage selon la revendication 1, selon lequel un événement particulier (EV) est :
- une sélection de l'utilisateur ; ou
- une détection d'obstacles dans l'environnement du véhicule ; et/ou
- des paramètres propres au véhicule.

3. Procédé d'affichage selon l'une des revendications précédentes, selon lequel la scène 3D comporte :
- au moins un écran virtuel (SCRV) qui se trouve dans un même référentiel que le modèle 3D du véhicule.

4. Procédé d'affichage selon l'une des revendications précédentes, selon lequel la scène 3D (SC) comporte :
- au moins un écran virtuel (SCRV) qui se trouve dans un référentiel différent du modèle 3D du véhicule.

5. Procédé d'affichage selon l'une des revendications précédentes, selon lequel lors de l'affichage de la scène 3D, le modèle 3D du véhicule est affiché selon un paramètre de transparence (TRP) associé.

6. Procédé d'affichage selon l'une des revendications précédentes, selon lequel une des caméras (CAM) utilisée pour générer une scène (SC) est une caméra arrière grand angle.

7. Procédé d'affichage selon l'une des revendications précédentes, selon lequel il comporte une étape initiale de :
- générer un modèle 3D du véhicule ;
- générer au moins un écran virtuel (SCRV) représentatif d'un angle solide observé (A) par au moins une caméra vidéo (CAM) du véhicule.

8. Dispositif (DISP) d'affichage d'aide à la conduite pour véhicule automobile, comportant :
- une unité de contrôle (UC) pour :
- déterminer au moins un point de vue (POV) d'un modèle 3D d'un véhicule, le point de vue (POV) variant en fonction d'un événement particulier (EV) ;
- générer une scène 3D (SC) en fonction du point de vue déterminé (POV), la scène comprenant :
- un modèle 3D du véhicule représenté selon le point de vue déterminé (POV), et
- au moins un écran virtuel (SCRV) représentatif d'un angle solide (A) observé par au moins une caméra vidéo (CAM) du véhicule et dont la forme est représentative de la perspective sous laquelle ledit écran virtuel va être vu par un utilisateur du véhicule, lorsque la scène 3D sera affichée à l'écran selon le point de vue déterminé (POV) ; et
- une unité d'affichage (DISPLAY) pour afficher la scène 3D avec au moins une image (I) acquise par la caméra vidéo (CAM) projetée dans un écran virtuel correspondant (SCRV) en fonction du point de vue (POV) déterminé, permettant ainsi d'avoir une approche plus réaliste de l'environnement du véhicule.

9. Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 7 et la présentation au conducteur du véhicule du meilleur point de vue du véhicule et de son environnement et ce de façon réaliste grâce à l'affichage 3D, à la modélisation du véhicule et aux images projetées dans le ou les écrans virtuels.

## Patentansprüche

1. Anzeigeverfahren zur Fahrerassistenz für Kraftfahrzeuge, mit den Schritten:
- Festlegen wenigstens eines Blickwinkels (POV) eines 3D-Modells eines Fahrzeugs, wobei sich der Blickwinkel (POV) abhängig von einem bestimmten Ereignis (EV) verändert;
- Erzeugen eines 3D-Ausschnitts (SC) abhängig von dem festgelegten Blickwinkel (POV), wobei der Ausschnitt umfasst:
- ein 3D-Modell des Fahrzeugs, das gemäß dem festgelegten Blickwinkel (POV) dargestellt ist, und
- wenigstens einen virtuellen Bildschirm (SCRV), der für einen von wenigstens einer Videokamera (CAM) des Fahrzeugs aufgenommenen Raumwinkel (A) repräsentativ ist und dessen Form für die Perspektive, in der der virtuelle Bildschirm von einem Fahrzeugnutzer gesehen wird, repräsentativ ist, wenn der 3D-Ausschnitt auf dem Bildschirm gemäß dem festgelegten Blickwinkel (POV) angezeigt wird; und
- Anzeigen des 3D-Ausschnitts mit wenigstens einem von der Videokamera (CAM) erfassten Bild (I), das abhängig von dem festgelegten Blickwinkel (POV) in einen entsprechenden virtuellen Bildschirm (SCRV) projiziert wird.

2. Anzeigeverfahren nach Anspruch 1,
bei dem das bestimmte Ereignis (EV)
- eine Nutzerauswahl ist; oder
- eine Erfassung von Hindernissen in der Umgebung des Fahrzeugs ist; und/oder
- fahrzeugtypische Parameter sind.

3. Anzeigeverfahren nach einem der vorhergehenden Ansprüche,
bei dem der 3D-Ausschnitt umfasst:
- wenigstens einen virtuellen Bildschirm (SCRV), der sich in ein und demselben Bezugssystem wie das 3D-Modell des Fahrzeugs befindet.

4. Anzeigeverfahren nach einem der vorhergehenden Ansprüche,
bei dem der 3D-Ausschnitt (SC) umfasst:
- wenigstens einen virtuellen Bildschirm (SCRV), der sich in einem anderen Bezugssystem als das 3D-Modell des Fahrzeugs befindet.

5. Anzeigeverfahren nach einem der vorhergehenden Ansprüche,
bei dem beim Anzeigen des 3D-Ausschnitts das 3D-Modell des Fahrzeugs gemäß einem zugeordneten Transparenzparameter (TRP) angezeigt wird.

6. Anzeigeverfahren nach einem der vorhergehenden Ansprüche,
bei dem eine der zum Erzeugen eines Ausschnitts (SC) verwendeten Kameras (CAM) eine hintere Weitwinkelkamera ist.

7. Anzeigeverfahren nach einem der vorhergehenden Ansprüche,
welches einen Ausgangsschritt umfasst zum
- Erzeugen eines 3D-Modells des Fahrzeugs;
- Erzeugen wenigstens eines virtuellen Bildschirms (SCRV), der für einen von wenigstens einer Videokamera (CAM) des Fahrzeugs aufgenommenen Raumwinkel (A) repräsentativ ist.

8. Anzeigevorrichtung (DISP) zur Fahrerassistenz für Kraftfahrzeuge, mit:
- einer Steuereinheit (UC) zum:
- Festlegen wenigstens eines Blickwinkels (POV) eines 3D-Modells eines Fahrzeugs, wobei sich der Blickwinkel (POV) abhängig von einem bestimmten Ereignis (EV) verändert;
- Erzeugen eines 3D-Ausschnitts (SC) abhängig von dem festgelegten Blickwinkel (POV), wobei der Ausschnitt umfasst:
- ein 3D-Modell des Fahrzeugs, das gemäß dem festgelegten Blickwinkel (POV) dargestellt ist, und
- wenigstens einen virtuellen Bildschirm (SCRV), der für einen von wenigstens einer Videokamera (CAM) des Fahrzeugs aufgenommenen Raumwinkel (A) repräsentativ ist und dessen Form für die Perspektive, in der der virtuelle Bildschirm von einem Fahrzeugnutzer gesehen wird, repräsentativ ist, wenn der 3D-Ausschnitt auf dem Bildschirm gemäß dem festgelegten Blickwinkel (POV) angezeigt wird; und
- einer Anzeigeeinheit (DISPLAY) zum Anzeigen des 3D-Ausschnitts mit wenigstens einem von der Videokamera (CAM) erfassten Bild (I), das abhängig von dem festgelegten Blickwinkel (POV) in einen entsprechenden virtuellen Bildschirm (SCRV) projiziert wird, wodurch somit eine realistischere Annäherung an die Umgebung des Fahrzeugs möglich ist.

9. Computerprogrammprodukt (PG) mit einer oder mehreren Befehlsfolgen, die von einer Informationsverarbeitungseinheit ausgeführt werden, wobei die Ausführung der Befehlsfolgen eine Durchführung des Verfahrens nach einem der vorhergehenden Ansprüche 1 bis 7 und die Darstellung des besten Blickwinkels des Fahrzeugs und seiner Umgebung für den Fahrzeugführer ermöglicht, und zwar in realistischer Weise dank der 3D-Anzeige, der Fahrzeugmodellierung und der in den oder die virtuellen Bildschirme projizierten Bilder.

## Claims

1. Method for displaying a driving aid for a motor vehicle, comprising the steps of:
- determining at least one viewpoint (POV) of a 3D model of a vehicle, the viewpoint (POV) varying according to a particular event (EV);
- generating a 3D scene (SC) according to the viewpoint (POV) determined, the scene comprising:
- a 3D model of the vehicle represented according to the viewpoint (POV) determined; and
- at least one virtual screen (SCRV) which is representative of a solid angle (A) observed by at least one video camera (CAM) of the vehicle, the form of which is representative of the perspective from which the said virtual screen will be seen by a user of the vehicle, when the 3D scene is displayed on the screen according to the viewpoint (POV) determined; and
- displaying the 3D scene with at least one image (I) acquired by the video camera (CAM) projected onto a corresponding virtual screen (SCRV) according to the viewpoint (POV) determined.

2. Method for displaying according to claim 1, wherein a particular event (EV) is:
- a selection by the user; or
- a detection of obstacles in the environment of the vehicle; and/or
- parameters specific to the vehicle.

3. Method for displaying according to one of the preceding claims, wherein the 3D scene comprises:
- at least one virtual screen (SCRV) which is in the same reference frame as the 3D model of the vehicle.

4. Method for displaying according to one of the preceding claims, wherein the 3D scene (SC) comprises:
- at least one virtual screen (SCRV) which is in a different reference frame from the 3D model of the vehicle.

5. Method for displaying according to one of the preceding claims, wherein, during the displaying of the 3D scene, the 3D model of the vehicle is displayed according to an associated transparency parameter (TRP).

6. Method for displaying according to one of the preceding claims, wherein one of the cameras (CAM) used in order to generate a scene (SC) is a large-angle rear camera.

7. Method for displaying according to one of the preceding claims, wherein it comprises an initial step of:
- generating a 3D model of the vehicle;
- generating at least one virtual screen (SCRV) which is representative of a solid angle (A) observed by at least one video camera (CAM) of the vehicle.

8. Device (DISP) for displaying a driving aid for a motor vehicle, comprising:
- a control unit (UC) in order to:
- determine at least one viewpoint (POV) of a 3D model of a vehicle, the viewpoint (POV) varying according to a particular event (EV);
- generate a 3D scene (SC) according to the viewpoint (POV) determined, the scene comprising:
- a 3D model of the vehicle represented according to the viewpoint (POV) determined; and
- at least one virtual screen (SCRV) which is representative of a solid angle (A) observed by at least one video camera (CAM) of the vehicle, the form of which is representative of the perspective from which the said virtual screen will be seen by a user of the vehicle, when the 3D scene is displayed on the screen according to the viewpoint (POV) determined; and
- a display unit (DISPLAY) to display the 3D scene with at least one image (I) acquired by the video camera (CAM) projected on a corresponding virtual screen (SCRV) according to the viewpoint (POV) determined, thus making it possible to have a more realistic approach to the environment of the vehicle.

9. Computer programme product (PG) comprising one or a plurality of sequences of instructions which can be executed by a data processing unit, the execution of the said sequences of instructions permitting implementation of the method according to any one of the preceding claims 1 to 7, and presentation, to the driver of the vehicle, of the best viewpoint of the vehicle and its environment, in a realistic manner thanks to the 3D display, the modelling of the vehicle, and the images which are projected on the virtual screen(s).
